(19) **Europäisches Patentamt**
**European Patent Office**
**Office européen des brevets**

(11) **EP 2 828 117 B1**

(12) **EUROPEAN PATENT SPECIFICATION**

(45) Date of publication and mention
of the grant of the patent:
**22.05.2019 Bulletin 2019/21**

(51) Int Cl.:
**B60L 11/00** *(2006.01)*   **H02J 7/00** *(2006.01)*
**B60L 11/18** *(2006.01)*

(21) Application number: **13710874.2**

(86) International application number:
**PCT/EP2013/055958**

(22) Date of filing: **21.03.2013**

(87) International publication number:
**WO 2013/139921 (26.09.2013 Gazette 2013/39)**

(54) **BATTERY MANAGEMENT SYSTEM**

BATTERIEVERWALTUNGSSYSTEM

SYSTÈME DE GESTION DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2012 GB 201205035**

(43) Date of publication of application:
**28.01.2015 Bulletin 2015/05**

(73) Proprietor: **Jaguar Land Rover Limited
Coventry, Warwickshire CV3 4LF (GB)**

(72) Inventor: **GREENWOOD, Jeremy
Coventry
Warwickshire CV3 4LF (GB)**

(74) Representative: **Holmes, Matthew William
Jaguar Land Rover
Patent Department W/1/073
Abbey Road
Whitley
Coventry
CV3 4LF (GB)**

(56) References cited:
**EP-A1- 2 211 193        EP-A2- 1 775 653
WO-A1-2005/114810    DE-A1-102005 034 588
DE-A1-102009 035 472  DE-A1-102010 039 913
GB-A- 2 424 318           US-A1- 2006 022 646
US-A1- 2008 274 400     US-A1- 2010 196 748
US-B1- 7 489 106**

Printed by Jouve, 75001 PARIS (FR)

**Description**

TECHNICAL FIELD

The present invention relates to apparatus and systems for balancing the state of charge of cells making up a traction battery of a motor vehicle. More particularly, but not exclusively. the invention relates to a battery for a motor vehicle, a wireless control module, a cell and a power system for a motor vehicle.

BACKGROUND OF THE INVENTION

It is known from US 2010/0196748 to use a wireless sensor network to monitor the cells within a battery stack. A controller can be provided to limit or stop the flow of current from one or more cells in the battery stack to preserve the battery stack. The controller can thereby provide a mechanism for protecting the battery stack from damage.

Furthermore, US 2008/0274400 discloses a battery cell having a charge controller for executing a pre-programmed set of instructions to balance the electrodes of the battery cell.

It is known from US 2008/0226969 to provide a heating strip for heating a battery pack to an operational temperature. US 2006/0022646 discloses a method of heating a battery to a temperature where charging can occur safely without the need for a separate warming structure, such as a heating blanket. A variable rate charger can be provided to adjust the charging current or to terminate a charging cycle. A dissipative balancing circuit can be provided to selectively shunt selected cells with selected value resistors to remove charge from the highest charged cells until they are near or match the charge on the lowest charged cells.

It is known from EP2211193 to provide an accumulator with a peripheral electronic control unit which is connected to sensors of temperature, voltage and/or other operating parameters of each individual cell. The peripheral electronic control unit may be connected to means for controlling the charging or discharging phase of the cell, and may be designed to be connected to a small data reception and transmission unit.

It is known from US2010/0196748 to provide a battery stack comprised of a plurality of cells including a plurality of wireless sensor nodes each electrically connected to a corresponding one of the cells.

It is against this background that the present invention has been conceived. Embodiments of the invention may provide an improved apparatus for balancing the cells of a battery. Other aims and advantages of the invention will become apparent from the following description, claims and drawings.

SUMMARY OF THE INVENTION

Aspects of the present invention relate to a battery for a motor vehicle; a wireless control module; a cell; and a power system for a motor vehicle.

According to another aspect, the invention relates to a battery for a motor vehicle, the battery comprising:

a plurality of electrically interconnected cells;
a plurality of wireless control modules each associated with a corresponding one of said plurality of cells;
wherein each of the plurality of wireless control modules comprise a controller configured to substantially match the state of charge (SOC) of the corresponding one of said plurality of cells with a target state of charge.
wherein the plurality of wireless control modules each comprises a temperature sensor; and
wherein the temperature sensor is bonded or mechanically crimped to a negative electrode of the corresponding one of said plurality of cells.

The cells may each have a dedicated wireless control module. The wireless control modules may each have a controller for controlling the SOC of the corresponding one of said plurality of cells to match the target SOC. By substantially matching the SOC of each cell to a target SOC, the cells in the battery can be balanced. The target SOC can be based on the state of charge of one or more of the other cells of the battery.

This helps to maintain the SOC of the cells within the battery substantially uniform. The balancing can be performed when the cells are being charged and/or discharged. The balancing may be performed only during part of a charging cycle, for example only at high SOC. When charging at a steady current, the SOC can be determined with relative ease and balancing can be performed during the charging cycle. A cell model can be used to determine the SOC of the cells within the battery to enable balancing of the SOC. Implementing a suitable cell model can enable the SOC to be determined with sufficient accuracy to enable balancing to be performed throughout the charge cycle.

The target SOC can be the SOC of one of the other cells in the battery. Alternatively, the target SOC can be calculated from the SOC of a plurality of the other cells in the battery. For example, the target SOC can be the median SOC level of a plurality of cells in the battery. The controller can be configured to predict a target SOC based on historic data relating to the charging behaviour of one or more cells.

The balancing of the cells can be passive whereby charge is dissipated from one or more cells. Alternatively, the balancing can be active and charge can be transferred from a first (high) cell to at least a second (low) cell in the battery. A combination of passive and active balancing could be implemented.

In a passive balancing system (for example utilising resistive balancing), the cells can be balanced to match the lowest SOC. In an active balancing system (for example either inductive or capacitive), energy can be transferred between the cells to increase the SOC of the lowest cells. The SOC of the cells can be matched approximately to a median SOC of the cells in the battery.

The balancing of each cell can be performed in response to at least one measured characteristic of that cell. Accordingly, the balancing of the cells in the battery can be performed dynamically and may occur at least substantially in real-time. For example, the voltage and the temperature of each cell can be measured to enable the SOC of the cell to be estimated.

The plurality of wireless control modules can each comprise at least one cell balancing resistor. The at least one cell balancing resistor can be coupled to the cell to dissipate charge. The wireless control modules can each comprise a switch for selectively connecting said at least one cell balancing resistor. The controller in the wireless control module can control actuation of the switch.

The at least one cell balancing resistor can provide a dual function of heating the cell to maintain the cell within an operating temperature range. The balancing resistor can comprise a printed film resistor thermally coupled to the corresponding cell. The printed film resistor can be positioned against at least one major surface of the cell or could extend partially or completely around the cell, for example to form a jacket.

Rather than utilise the cell balancing resistor for cell heating, a dedicated cell heater can be provided. A cell heater can be positioned between adjacent cells to heat more than one cell. Alternatively, a dedicated cell heater can be associated with each of said plurality of cells. The cell heater can be controlled by the wireless control module of the corresponding one of said plurality of cells. The cell heater can be a resistor which can be selectively connected across the cell.

The wireless control modules can each comprise a voltage sensor for measuring the cell voltage and/or a temperature sensor for measuring the cell temperature. The measured voltage and temperature of the cell can be used to estimate the SOC of the cell, for example by referencing a cell model. The temperature sensor can be thermally coupled to one or more of the cells. For example, the temperature sensor could be positioned between adjacent cells. Alternatively, the temperature sensor can be associated with the corresponding one of said cells. The temperature sensor can, for example, be thermally coupled to an electrode of the corresponding one of said plurality of cells. The temperature sensor could be thermally coupled to a negative electrode of the corresponding one of said plurality of cells. The negative electrode extends into a core of the cell and, therefore, can provide an improved measurement of the temperature of the cell core. By providing a temperature sensor for measuring the temperature of each cell (rather than rely on a localised temperature reading) the SOC of each cell can be determined with greater accuracy. A heater could be attached to the negative electrode since it provides a thermal pathway to the core of the cell.

The wireless control modules can each comprise a transceiver for communicating wirelessly with: a battery management system (BMS); and/or other of said plurality of wireless control modules. The battery management system can be positioned remote from the battery and may be coupled to the vehicle controller area network (CAN) bus. The communication with other wireless control modules can be utilised to establish a mesh network.

The wireless control modules can each comprise a cell isolation switch for electrically isolating the cell from the other cells in the battery. The cell isolation switch can be used to bypass a cell within the battery, for example to prevent over-discharge of a cell or when the cell has reached a peak-charge level. The wireless control module (operating autonomously or in response to instructions from the battery management system) can terminate discharge from a cell if the measured voltage for that cell reaches a high or low voltage threshold.

The cells forming the battery can be electrically connected in a series and/or parallel configuration. For example, cells could be connected in parallel to form blocks which are then connected in series. Alternatively, the cells can be arranged in series strings, and a switching device may be associated with each string to enable each string to be isolated or otherwise managed. Forming series strings can also allow different types of cells (for example having different chemical compositions) to be combined within the battery, for example to optimise power and energy types of cells. A series configuration of this type would normally be prohibitively expensive due to the number of voltage measurements and associated wires. However, the wireless node according to the present invention measures the voltage of each cell, thereby enabling a series string configuration.

According to a further aspect, the present invention relates to a wireless control module for controlling a cell in a battery pack, the wireless control module comprising:

> a controller; and
> a transceiver for communicating with a battery management system and/or other wireless control modules associated with other cells in the battery pack;
wherein each of the wireless control modules comprises a temperature sensor;
wherein the temperature sensor is bonded or mechanically crimped to a negative electrode of the cell; and
wherein the controller is configured to control the state of charge (SOC) of the cell. The wireless control module can control the state of charge of the cell during charging and/or discharging.

The wireless control module can comprise a voltage sensor for measuring the voltage of the cell. The wireless control module can comprise a temperature sensor for measuring the temperature of the associated cell in the battery pack. The measured voltage and temperature can be used to estimate the SOC of the cell. The controller can be configured to estimate the SOC of the cell based on the measured voltage and temperature.

The wireless control module can also comprise a memory device for storing historical data. The measured voltage and/or temperature data can be stored for analysis. A database of historical data generated over the life of a cell could provide useful information about the cell behaviour and characteristics. In use, the controller could also use the stored historical data to define a charge strategy for a cell. For example, the controller could estimate a target SOC for a particular cell based on historic data relating to the charging behaviour of that cell.

The wireless control module could also comprise a unique identifier code. This code could be used during the manufacturing process to track the wireless control module and an associated cell. The code could also serve a security function, for example in the event that the vehicle or the battery is stolen. It will be appreciated that providing a unique identifier code would enable the cell to be tracked from fabrication through to disposal.

The invention further relates to the wireless control module in combination with a cell. The wireless control module could be integrated into the cell.

The invention further relates to a battery pack comprising a plurality of said cells in combination with said wireless control modules. A dedicated wireless control module can be provided for each cell in the battery pack. The transceiver can be configured to communicate directly with the battery management system or indirectly via wireless control modules associated with other cells in the battery pack. A mesh network can be established between the wireless control modules.

According to a still further aspect, the invention relates to a power system for a motor vehicle; the system comprising:

a battery including a plurality of electrically interconnected cells;
a plurality of wireless control modules each being associated with a corresponding one of said plurality of cells; and
a battery management system for wirelessly receiving data from said plurality of wireless control modules;
the battery management system being configured to substantially match the state of charge (SOC) of the corresponding one of said plurality of cells with a target state of charge. The balancing of the cell(s) can be performed during charging and/or discharging of the battery.

The plurality of wireless control modules can each comprise a voltage sensor for measuring the voltage of the corresponding one of said plurality of cells. A separate temperature sensor could be provided for measuring the temperature of one or more cells. Alternatively, the wireless control modules can each comprise a temperature sensor for measuring the temperature of the associated cell in the battery. The battery management system can be configured to control each of the wireless control modules to control the temperature of said plurality of cells.

The target state of charge can be based on the state of charge of one or more of the other cells. The target SOC can be the SOC of one of the other cells in the battery. Alternatively, the target SOC can be calculated from the SOC of a plurality of the other cells in the battery. For example, the target SOC can be the median SOC level of a plurality of cells in the battery. By at least substantially matching the charge of the cells to a target SOC, the cells in the battery can be balanced. The battery management system could set the target SOC with reference to historical data relating to one or more cells. For example, the battery management system could estimate a target SOC for one or more cells based on historic data relating to the charging behaviour of the cell(s).

The system can provide simultaneous multi-cell balancing. The system can determine which cell(s) to bypass based on the status of the entire battery.

It will be appreciated that the present invention relates to a cell having integral means for monitoring cell temperature and/or voltage and controlling SOC within the cell wirelessly. The cell can comprise a dual purpose balancing resistor and cell heater. The invention relates to a battery having a plurality of such cells. The invention further relates to a battery management system (BMS) comprising said battery along with a communication means for interfacing to a vehicle CAN bus.

The battery herein can be a traction battery for a traction electric motor.

According to yet another aspect, the invention relates to a vehicle comprising a battery and/or a power system as described herein. The vehicle can be an electric vehicle (EV) or a hybrid vehicle.

Within the scope of this application it is expressly intended that the various aspects, embodiments, examples and alternatives set out in the preceding paragraphs, in the claims and/or in the following description and drawings, and in particular the individual features thereof, may be taken independently or in any combination. For example features described in connection with one embodiment are applicable to all embodiments, unless such features are incompatible.

BRIEF DESCRIPTION OF DRAWINGS

Embodiments of the invention will now be described, by way of example only, with reference to the accompanying drawings in which:-

Figure 1 illustrates a traction battery comprising an array of cells in accordance with an embodiment of the present invention;

Figure 2 shows a schematic representation of a wireless control module for each cell of the traction battery shown in Figure 1; and

Figure 3 illustrates a cell model for determining the state of charge of a cell based on the measured temperature and voltage.

DETAILED DESCRIPTION

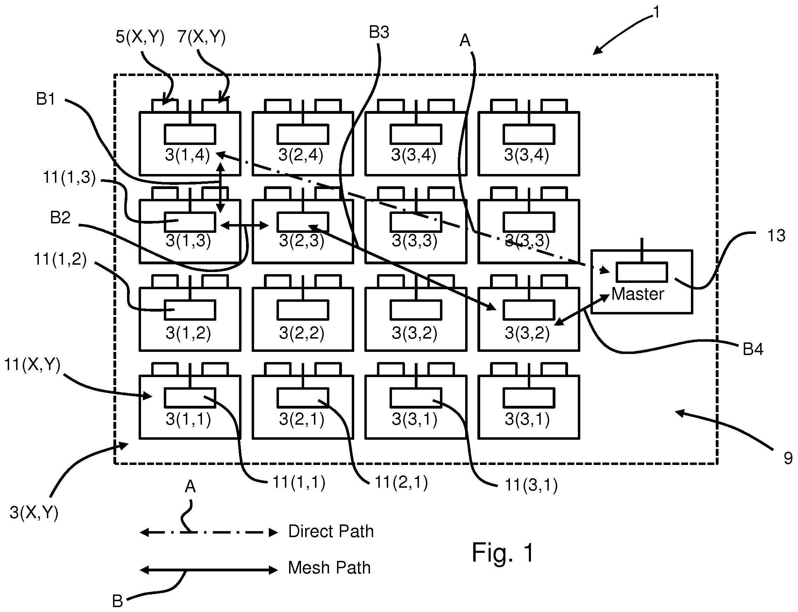

A traction battery 1 for a motor vehicle (not shown) is illustrated in Figure 1. The traction battery 1 has positive and negative output terminals which are electrically connected to one or more electric drive motors. The motor vehicle can be a hybrid electric vehicle (HEV) or an electric vehicle (EV).

The traction battery 1 comprises a plurality of power cells $3_{(x,y)}$ each having positive and negative electrodes $5_{(x,y)}$, $7_{(x,y)}$. The cells $3_{(x,y)}$ are arranged in parallel and/or series to form an array 9 which is connected to the positive and negative output terminals of the traction battery 1. For the sake of clarity, the array 9 is illustrated as a 4x4 matrix of cells $3_{(x,y)}$. In practice, the traction battery 1 according to the present embodiment comprises 485 interconnected cells $3_{(x,y)}$. The cells $3_{(x,y)}$ are lithium ion (Li+) cells, but other types of cells could be employed. The cells may be arranged in three-dimensional arrays.

Due to presently available cell sizes, the cells $3_{(x,y)}$ are arranged in the traction battery with some parallel connections. Typically, the cells $3_{(x,y)}$ are arranged in parallel to form blocks which are then connected in series. This allows a common voltage measurement to be performed for the parallel set as the cells $3_{(x,y)}$ are electrically connected. The disadvantage is that this does not allow cells $3_{(x,y)}$ to be easily switched out. If the cells $3_{(x,y)}$ are arranged in series strings, it is more straightforward to associate a switching device with each string to enable each string to be isolated or otherwise managed, for example to enable a vehicle limp home mode to be engaged. Arranging the cells $3_{(x,y)}$ in series strings would also allow different types of cells $3_{(x,y)}$ (for example having different chemical compositions) to be combined within the traction battery, for example to optimise power and energy types of cells $3_{(x,y)}$.

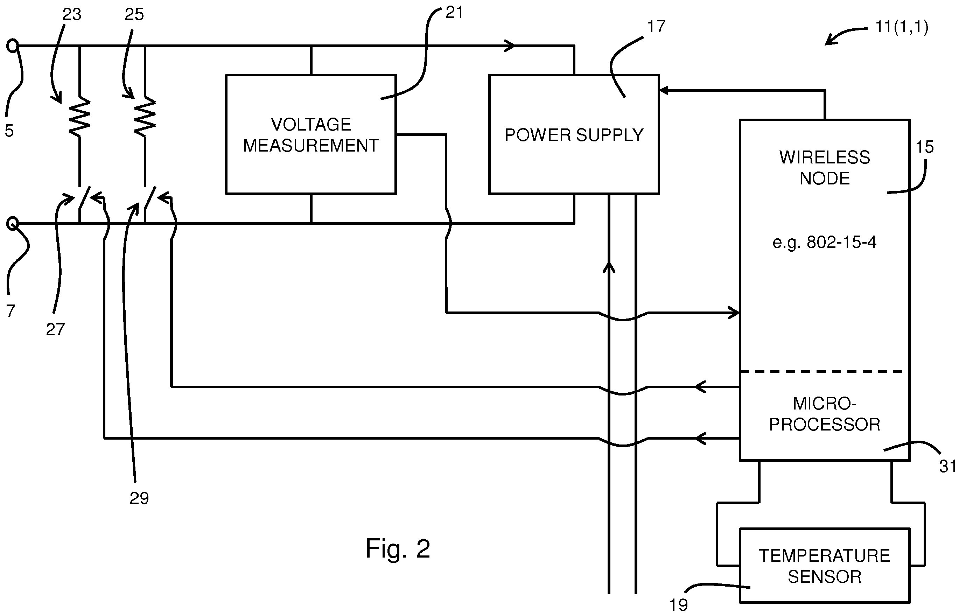

The cells $3_{(x,y)}$ each have a wireless control module $11_{(x,y)}$ for wireless radio frequency communication with an internal/external master battery management system 13. The wireless control modules $11_{(x,y)}$ are connected to the positive and negative electrodes $5_{(x,y)}$, $7_{(x,y)}$ of a corresponding cell $3_{(x,y)}$. The wireless control modules $11_{(x,y)}$ all have the same construction but are each identified by a unique identification code. A first wireless control module $11_{(1,1)}$ associated with a first cell $3_{(1,1)}$ will now be described with reference to Figure 2.

The first wireless control module $11_{(1,1)}$ comprises a wireless transceiver node 15, a power supply 17, a temperature sensor 19 and a voltage sensor 21, a balancing resistor 23 and a cell heater 25. The balancing resistor 23 and the cell heater 25 are connected to the positive and negative electrodes $5_{(1,1)}$, $7_{(1,1)}$ of the first cell $3_{(1,1)}$ and can be controlled independently of each other by a balancing control switch 27 and a heater control switch 29.

The SOC of the first cell $3_{(1,1)}$ can be estimated using the measured voltage and temperature, as described in more detail below. As shown in Figure 2, the voltage sensor 21 is connected to the positive and negative electrodes $5_{(1,1)}$, $7_{(1,1)}$. To monitor the temperature of the core of the cell $3_{(1,1)}$, the temperature sensor 19 is thermally coupled to one of the electrodes $5_{(1,1)}$, $7_{(1,1)}$. The temperature sensor 19 can, for example, be bonded or mechanically crimped to the electrode $5_{(1,1)}$, $7_{(1,1)}$. Thermally coupling the temperature sensor 19 to the negative electrode $7_{(1,1)}$ provides more accurate temperature readings as the negative electrode $7_{(1,1)}$ provides a better thermal connection with the core of the first cell $3_{(1,1)}$.

The wireless transceiver node 15 is compliant with IEEE 802.15.4 which allows a mesh network to be established between the first wireless control module $11_{(1,1)}$ and the master battery management system 13. As described in more detail below, the mesh network allows the wireless control module $11_{(1,1)}$ to communicate with the battery management system 13 both directly and indirectly. The wireless transceiver node 15 in the present embodiment operates to a standard defined by 'ZigBee' (further information available from ZigBee Alliance, 2400 Camino Ramon, Suite 375, San Ramon, CA 94583, USA).

The wireless transceiver node 15 comprises a controller (or microprocessor) 31 for receiving cell temperature and cell voltage data from the temperature sensor 19 and the voltage sensor 21. The measured data is transmitted to the battery management system 13 by the wireless control module $11_{(1,1)}$ and can be relayed to the vehicle CAN bus. In response to instructions received from the battery management system 13, the controller 31 can operate the balancing control switch 27 and the heater control switch 29 to control the balancing resistor 23 and the cell heater 25. In the present embodiment, the balancing resistor 23 and the cell heater 25 are combined into a dual purpose printed film resistor (flexi printed circuit board) arranged in thermal communication with the outside of the first cell $3_{(1,1)}$. The printed film resistor can provide cell balancing during charging and heating when the ambient temperature is below an operating temperature of the traction battery 1.

The battery management system 13 according to the present invention implements a backup strategy in the case of communications or software failure. There are four main aspects of this strategy, namely:

(i) The radio frequency (RF) communication provides a mesh network capability to provide more reliable data gathering.

(ii) The battery management system 13 is able to shut down the whole traction battery 1, or sections of it, if communications from a specific wireless transceiver node 15 are lost and the data regarding the status of the related cell $3_{(x,y)}$ is unknown.

(iii) The wireless control node 15 has a local hardware implemented safety feature to turn on the balancing discharge if the voltage exceeds a pre-set limit (which could alternatively be implemented in software).

(iv) The battery management system 13 can monitor the reported voltages and temperatures against the known charge and discharge currents and check for plausibility. If implausible reports are identified, the battery management system 13 can shut down the traction battery 1 in a safe manner.

The power supply 17 draws power from the first cell $3_{(1,1)}$ to operate the wireless transceiver node 15 and the controller 31. The wireless transceiver node 15 can communicate with the battery management system 13 for 1ms out of every 100ms. This is sufficient time to transmit the measured temperature and voltage data relating to the cell $3_{(1,1)}$ to the battery management system 13. The temperature and voltage measurements could also be completed by the wireless transceiver node 15 in the operating window of 1ms out of every 100ms. To reduce parasitic power losses, the wireless transceiver node 15 can control the power supply 17 to turn it ON/OFF or to enter a sleep mode with reduced power consumption. If the measured temperature and/or voltage is outside a safety threshold, the wireless transceiver node 15 could operate continuously. The battery management system 13 could be configured periodically to check for alert signals from the wireless transceiver node 15.

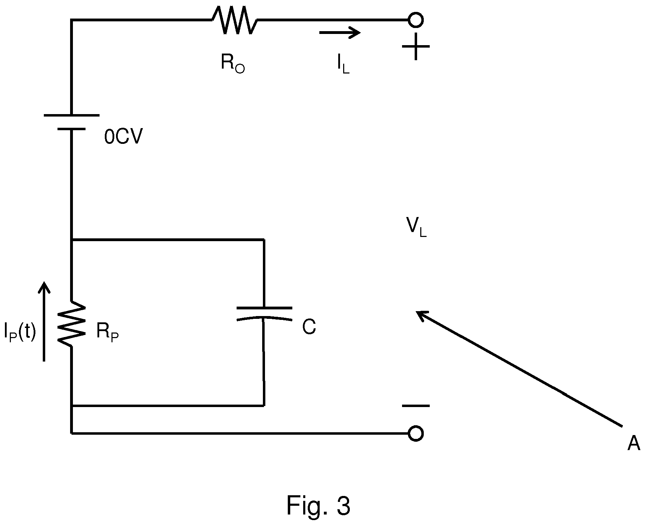

The SOC of an Li+ cell $3_{(x,y)}$ can be estimated based on the measured voltage and temperature. The relationship between the load voltage (VL) and the open circuit voltage (OCV) is represented in Equation 1 and the cell model A shown in Figure 3.

| $V_L$ | = | Open Circuit Voltage | + | Ohmic Resistance Effect | + | Polarisation Resistance Effect | + | Double-Layer Capacitance Effect |

$$V_L = OCV + R_0 I_L + R_p I_p + \frac{1}{C_{dl}} \int I_L dt$$

**EQUATION 1**

Where:

$V_L$ = Load Voltage

OCV = Open Circuit Voltage*1

$I_P$ = Polarisation Current

$R_0$ = Bulk Resistance*2

$I_L$ = Current Load

$R_P$ = Polarisation Resistance*2

$C_{dl}$ = Double-layer capacitance*2

*1 *Parameter that varies with SOC*
*2 *Parameters that vary with SOC and temperature.*

The operation of the wireless control modules $11_{(x,y)}$ to control the cells $3_{(x,y)}$ in the array 9 will now be described with reference to Figure 1. The primary role of the wireless control modules $11_{(x,y)}$ is to balance the SOC of the cells $3_{(x,y)}$, particularly when the traction battery 1 is being charged.

The voltage sensors 21 in the wireless control modules $11_{(x,y)}$ measure the voltage of each cell $3_{(x,y)}$ which, when combined with the temperature measurement for that cell, provides an indication of the SOC of the cell $3_{(x,y)}$. The measured voltage and temperature data is transmitted to the battery management system 13 along with the unique identifier code for that cell $3_{(x,y)}$. Differences in the cell voltages are identified by the battery management system 13 to determine which (if any) cells $3_{(x,y)}$ are not balanced.

The battery management system 13 identifies those cells $3_{(x,y)}$ having a higher SOC and transmits a control signal to the respective wireless control modules $11_{(x,y)}$ to activate the balancing control switch 27 to connect the balancing resistor 23 across the electrodes $5_{(x,y)}$, $7_{(x,y)}$ of the cell $3_{(x,y)}$. The cell $3_{(x,y)}$ is thereby by-passed or shunted as the other cells $3_{(x,y)}$ are charged. By continuing to monitor the voltages of the cells $3_{(x,y)}$, the battery management system 13 can determine when the SOC of the cells $3_{(x,y)}$ is balanced within a pre-defined threshold. The battery management system 13 then transmits a control signal to the wireless control modules $11_{(x,y)}$ to disconnect the balancing resistor 23 and thereby re-instate charging of that cell $3_{(x,y)}$. This process of monitoring the SOC of the cells $3_{(x,y)}$ in the traction battery 1 is repeated continually. The battery management system can thereby provide dynamic control of the charging of each cell $3_{(x,y)}$ to balance their SOC. This helps to protect the cells $3_{(x,y)}$ during charging and can increase the usable capacity of the traction battery 1. The balancing process could optionally be performed during discharge of the cells $3_{(x,y)}$.

The wireless control modules $11_{(x,y)}$ also measure the temperature at the core of the cells $3_{(x,y)}$ by measuring the temperature of the negative electrode $7_{(x,y)}$. If the temperature of the battery drops too low, the discharge capacity of the traction battery 1 can be reduced. Moreover, if the temperature of the cell drops below approximately -5°C, it may be dangerous to charge the cell due to the effects of lithium plating. To help avoid such a scenario, the battery management system 13 transmits a control signal to the wireless control module(s) $11_{(x,y)}$ to turn on the cell heater 25 if the temperature detected by the temperature sensor 19 drops below a lower limit. Conversely, if the temperature sensor 19 detects that the temperature of the cell $3_{(x,y)}$ is above an upper limit, an alert signal can be transmitted from the wireless control module $11_{(x,y)}$ to the battery management system 13. The battery management system 13 could transmit a deactivation signal to the wireless control modules $11_{(x,y)}$ to by-pass or disable one or more of the cells $3_{(x,y)}$ to prevent overheating (for example, a series string of the cells $3_{(x,y)}$ could be disabled). The wireless control modules $11_{(x,y)}$ could comprise an isolation switch to isolate the corresponding cell $3_{(x,y)}$.

The packing of the cells $3_{(x,y)}$ within the traction battery 1 (which typically comprises a metal support assembly) can cause interference of an RF signal. The interference would potentially reduce the reliability of the battery management system 13. The mesh network established by the wireless control module(s) $11_{(x,y)}$ can help to avoid this situation. Specifically, the wireless control module(s) $11_{(x,y)}$ can communicate either directly with the battery management system 13 or indirectly by communicating with intermediate wireless control module(s) $11_{(x,y)}$ to establish alternate communication paths.

By way of example, Figure 1 shows a direct communication path between a wireless control module(s) $11_{(1,4)}$ and the battery management system 13 (represented by a dashed line A); and an indirect communication path whereby the data is relayed between the wireless control module(s) $11_{(1,4)}$ and the battery management system 13 (represented by a series of continuous lines $B_1$, $B_2$, $B_3$ and $B_4$). The indirect communication path consists of a series of communication links between intermediate wireless control module(s) $11_{(1,3)}$, $11_{(2,3)}$, $11_{(4,2)}$ which are each over a shorter distance and, therefore, less susceptible to interference. The communication pathways between each wireless control module $11_{(x,y)}$ could be pre-programmed or could be determined dynamically.

It will be appreciated that various changes and modifications can be made to the traction battery 1 and the wireless control module(s) $11_{(x,y)}$ described herein without departing from the spirit and scope of the present invention.

The temperature sensor 19 has been described as being thermally coupled to the negative electrode $7_{(x,x)}$. The temperature sensor 19 could alternatively be mounted on the wireless control module(s) $11_{(x,y)}$ so as to extend between the cells $3_{(x,y)}$. Alternatively, a temperature sensor 19 could be integrated into each cell $3_{(x,y)}$. The integrated temperature sensor 19 could be provided with connecting tabs for connection to the wireless control module(s) $11_{(x,y)}$. Indeed, a complete wireless transceiver node 15 could be integrated into each cell $3_{(x,y)}$.

The present invention has been described with reference to passive charge balancing whereby current is drawn from the cells $3_{(x,y)}$. However, the invention could implement active charge balancing of the cells $3_{(x,y)}$. For example, balancing could be performed by drawing current from a first cell $3_{(x,y)}$ and supplying it to a second cell $3_{(x,y)}$ as appropriate.

Alternative charge balancing techniques could be employed without departing from the scope of the present application. For example, a field effect transistor (FET) could be placed in parallel with each cell $3_{(x,y)}$ and selectively bypass the cell $3_{(x,y)}$ when voltage differences are detected.

The wireless control module(s) $11_{(x,y)}$ could comprise memory for storing historical data measured by the temperature sensor 19 and/or the voltage sensor 21. Alternatively, the historical data could be stored in memory associated with the battery management system 13.

The unique identification code associated with each wireless control module(s) $11_{(x,y)}$ could be used to track a cell $3_{(x,y)}$ throughout its lifecycle. The identification code could function as a security feature to allow the cell $3_{(x,y)}$ to be identified.

It will be appreciated that various changes and modifications can be made to the apparatus and systems described herein without departing from the spirit and scope of the present invention. For example, the target SOC has been described herein as being based on the SOC of other cells $3_{(x,y)}$ in the battery 1. However, the target SOC could be based on alternate charging strategies, for example based on data determined by historical, experimental or theoretical analysis. The target SOC could, for example, be increased incrementally to provide staged charging of the cells $3_{(x,y)}$.

**Claims**

1. A wireless control module (11) for controlling a cell (3) in a battery pack (1), the wireless control module comprising:

   a controller (31);
   a transceiver (15) for communicating with a battery management system, BMS, (13) and/or other wireless control modules (11) associated with other cells in the battery pack;
   wherein each of the wireless control modules (11) comprises a temperature sensor (19);
   wherein the temperature sensor (19) is bonded or mechanically crimped to a negative electrode of the cell (3); and
   wherein the controller (31) is configured to control the state of charge, SOC, of the cell.

2. A wireless control module (11) as claimed in claim 1 wherein the wireless control module (11) comprises at least one cell balancing resistor (23) and a switch (27) for selectively connecting said at least one cell balancing resistor (13), wherein the controller (31) is configured to control the switch to substantially match the state of charge of a cell with which the controller (31) is associated with a target state of charge.

3. A wireless control module (11) as claimed in claim 1 or 2 further comprising a memory device for storing historical data.

4. A wireless control module (11) as claimed in claims 1-3 further comprising a unique identifier code.

5. A battery (1) for a motor vehicle, the battery comprising:

   a plurality of electrically interconnected cells (3);
   a plurality of wireless control modules (11) as claimed in claim 1, 2 or 3 each associated with a corresponding one of said plurality of cells (3); and
   wherein the temperature sensor (19) of at least one of the plurality of wireless control modules (11) is bonded or mechanically crimped to a negative electrode of the corresponding one of said plurality of cells (3).

6. A battery (1) as claimed in claim 5, wherein the target state of charge is based on the charge of one or more of the other cells (3) in the battery (1).

7. A battery (1) as claimed in claim 5 or 6, wherein said at least one cell balancing resistor (23) comprises a printed film resistor thermally coupled to an exterior of the corresponding one of said plurality of cells (3).

8. A battery (1) as claimed in any one of claims 5 to 7, further comprising a plurality of cell heaters (25) each associated with one of said plurality of cells (3).

9. A battery (1) as claimed in claim 8, wherein each cell heater (25) is controlled by the wireless control module (11) of the corresponding one of said plurality of cells (3).

10. A battery (1) as claimed in any of claims 5 to 9, wherein the wireless control modules (11) each comprise a cell isolation switch for electrically isolating the corresponding one of said cells (3) from the other cells in the battery (1).

11. A battery (1) as claimed in any one of claims 5 to 10, wherein the plurality of wireless control modules (11) each comprises a voltage sensor (21).

12. A battery (1) as claimed in any of claims 5 to 11, wherein the temperature sensor (19) is thermally coupled to a negative electrode of the corresponding one of said plurality of cells (3).

13. A power system (13) for a motor vehicle; the system comprising:
a battery (1) as claimed in any of claims 5-10.

14. A power system (13) as claimed in claim 13, wherein the wireless control modules (11) each comprise one or more of the following:

a controller (31) for controlling the state of charge of the corresponding one of said plurality of cells (3);
a voltage sensor (21) for measuring the voltage of the corresponding one of said plurality of cells (3); and
a temperature sensor (19) for measuring the temperature of the corresponding one of said plurality of cells (3).

15. A motor vehicle comprising a wireless control module (11) as claimed in any of claims 1-4; or a battery (1) as claimed in any one of claims 5 to 12; or; or a power system (13) as claimed in claim 13 or 14.


**Patentansprüche**

1. Drahtloses Steuermodul (11) zum Steuern einer Zelle (3) in einem Batteriepack (1), wobei das drahtlose Steuermodul Folgendes umfasst:

eine Steuervorrichtung (31);
einen Transceiver (15) zum Kommunizieren mit einem Batterieverwaltungssystem (*battery management system* - BMS) (13) und/oder anderen drahtlosen Steuermodulen (11), die anderen Zellen in dem Batteriepack zugeordnet sind;
wobei jedes der drahtlosen Steuermodule (11) einen Temperatursensor (19) umfasst;
wobei der Temperatursensor (19) an eine negative Elektrode der Zelle (3) geklebt oder mechanisch gecrimpt ist; und
wobei die Steuervorrichtung (31) konfiguriert ist, um den Ladezustand *(state of charge*-SOC) der Zelle zu steuern.

2. Drahtloses Steuermodul (11) nach Anspruch 1, wobei das drahtlose Steuermodul (11) wenigstens einen Zellenausgleichswiderstand (23) und einen Schalter (27) zum selektiven Verbinden des wenigstens einen Zellenausgleichswiderstands (13) umfasst, wobei die Steuervorrichtung (31) konfiguriert ist, um den Schalter zu steuern, um im Wesentlichen mit dem Ladezustand einer Zelle übereinzustimmen, mit dem die Steuervorrichtung (31) einem Zielladezustand zugeordnet ist.

3. Drahtloses Steuermodul (11) nach Anspruch 1 oder 2, das ferner eine Speichervorrichtung umfasst, um historische Daten zu speichern.

4. Drahtloses Steuermodul (11) nach den Ansprüchen 1-3, ferner einen eindeutigen Identifizierungscode umfassend.

5. Batterie (1) für ein Kraftfahrzeug, wobei die Batterie Folgendes umfasst:

mehrere elektrisch miteinander verbundene Zellen (3);
mehrere drahtlose Steuermodule (11) nach Anspruch 1, 2 oder 3, die jeweils einer entsprechenden der mehreren Zellen (3) zugeordnet sind; und
wobei der Temperatursensor (19) wenigstens eines der mehreren drahtlosen Steuermodule (11) an eine negative Elektrode der entsprechenden einen der mehreren Zellen (3) geklebt oder mechanisch gecrimpt ist.

**6.** Batterie (1) nach Anspruch 5, wobei der Zielladezustand auf der Ladung einer oder mehrerer der anderen Zellen (3) in der Batterie (1) basiert.

**7.** Batterie (1) nach Anspruch 5 oder 6, wobei der wenigstens eine Zellenausgleichswiderstand (23) einen gedruckten Filmwiderstand umfasst, der thermisch mit einem Äußeren der entsprechenden einen der mehreren Zellen (3) gekoppelt ist.

**8.** Batterie (1) nach einem der Ansprüche 5 bis 7, die ferner mehrere Zellenheizer (25) umfasst, die jeweils einer der mehreren Zellen (3) zugeordnet ist.

**9.** Batterie (1) nach Anspruch 8, wobei jeder Zellenheizer (25) durch das drahtlose Steuermodul (11) der entsprechenden einen der mehreren Zellen (3) gesteuert wird.

**10.** Batterie (1) nach einem der Ansprüche 5 bis 9, wobei die drahtlosen Steuermodule (11) jeweils einen Zellenisolationsschalter zum elektrischen Isolieren der entsprechenden einen der Zellen (3) von den anderen Zellen in der Batterie (1) umfassen.

**11.** Batterie (1) nach einem der Ansprüche 5 bis 10, wobei die mehreren drahtlosen Steuermodule (11) jeweils einen Spannungssensor (21) umfassen.

**12.** Batterie (1) nach einem der Ansprüche 5 bis 11, wobei der Temperatursensor (19) thermisch mit einer negativen Elektrode der entsprechenden einen der mehreren Zellen (3) gekoppelt ist.

**13.** Leistungssystem (13) für ein Kraftfahrzeug; wobei das System Folgendes umfasst:
eine Batterie (1) nach einem der Ansprüche 5-10.

**14.** Leistungssystem (13) nach Anspruch 13, wobei die drahtlosen Steuermodule (11) jeweils Folgendes umfassen:

eine Steuervorrichtung (31) zum Steuern des Ladezustands der entsprechenden einen der mehreren Zellen (3);
einen Spannungssensor (21) zum Messen der Spannung der entsprechenden einen der mehreren Zellen (3); und/oder
einen Temperatursensor (19) zum Messen der Temperatur der entsprechenden einen der mehreren Zellen (3).

**15.** Kraftfahrzeug, Folgendes umfassend: ein drahtloses Steuermodul (11) nach einem der Ansprüche 1-4; oder eine Batterie (1) nach einem der Ansprüche 5 bis 12; oder; oder ein Leistungssystem (13) nach Anspruch 13 oder 14.

**Revendications**

**1.** Module de commande sans fil (11) pour commander une cellule (3) dans un bloc-batterie (1), le module de commande sans fil comprenant :

un dispositif de commande (31) ;
un émetteur-récepteur (15) pour communiquer avec un système de gestion de batterie, BMS, (13) et/ou d'autres modules de commande sans fil (11) associés à d'autres cellules dans le bloc-batterie ;
chacun des modules de commande sans fil (11) comprenant un capteur de température (19) ;
le capteur de température (19) étant collé ou serti mécaniquement sur une électrode négative de la cellule (3) ; et
le dispositif de commande (31) étant configuré pour commander l'état de charge, SOC, de la cellule.

**2.** Module de commande sans fil (11) selon la revendication 1, dans lequel le module de commande sans fil (11) comprend au moins une résistance d'équilibrage de cellules (23) et un commutateur (27) pour raccorder sélectivement ladite au moins une résistance d'équilibrage de cellules (13), le dispositif de commande (31) étant configuré pour commander le commutateur afin qu'il corresponde sensiblement à l'état de charge d'une cellule à laquelle le dispositif de commande (31) est associé avec un état de charge cible.

**3.** Module de commande sans fil (11) selon la revendication 1 ou 2, comprenant en outre un dispositif de mémoire pour stocker des données historiques.

**4.** Module de commande sans fil (11) selon les revendications 1 à 3, comprenant en outre un code d'identification unique.

**5.** Batterie (1) pour un véhicule automobile, la batterie comprenant :

une pluralité de cellules interconnectées électriquement (3) ;
une pluralité de modules de commande sans fil (11) selon la revendication 1, 2 ou 3, associés chacun à une cellule correspondante de ladite pluralité de cellules (3) ; et
le capteur de température (19) d'au moins l'un de la pluralité de modules de commande sans fil (11) étant collé ou serti mécaniquement sur une électrode négative de la cellule correspondante de ladite pluralité de cellules (3).

**6.** Batterie (1) selon la revendication 5, dans laquelle l'état de charge cible est basé sur la charge d'une ou de plusieurs des autres cellules (3) dans la batterie (1).

**7.** Batterie (1) selon la revendication 5 ou 6, dans laquelle ladite au moins une résistance d'équilibrage de cellules (23) comprend une résistance à film imprimé couplée thermiquement à un extérieur de la cellule correspondante de ladite pluralité de cellules (3).

**8.** Batterie (1) selon l'une quelconque des revendications 5 à 7, comprenant en outre une pluralité d'éléments chauffants de cellules (25) associés chacun à l'une de ladite pluralité de cellules (3).

**9.** Batterie (1) selon la revendication 8, dans laquelle chaque élément chauffant de cellules (25) est commandé par le module de commande sans fil (11) de la cellule correspondante de ladite pluralité de cellules (3).

**10.** Batterie (1) selon l'une quelconque des revendications 5 à 9, dans laquelle les modules de commande sans fil (11) comprennent chacun un commutateur d'isolation de cellules pour isoler électriquement la cellule correspondante desdites cellules (3) des autres cellules dans la batterie (1).

**11.** Batterie (1) selon l'une quelconque des revendications 5 à 10, dans laquelle la pluralité de modules de commande sans fil (11) comprennent chacun un capteur de tension (21).

**12.** Batterie (1) selon l'une quelconque des revendications 5 à 11, dans laquelle le capteur de température (19) est couplé thermiquement à une électrode négative de la cellule correspondante de ladite pluralité de cellules (3).

**13.** Système d'alimentation (13) pour un véhicule automobile ; le système comprenant :
une batterie (1) selon l'une quelconque des revendications 5 à 10.

**14.** Système d'alimentation (13) selon la revendication 13, dans lequel les modules de commande sans fil (11) comprennent chacun un ou plusieurs des éléments suivants :

un dispositif de commande (31) pour commander l'état de charge de la cellule correspondante de ladite pluralité de cellules (3) ;
un capteur de tension (21) pour mesurer la tension de la cellule correspondante de ladite pluralité de cellules (3) ; et
un capteur de température (19) pour mesurer la température de la cellule correspondante de ladite pluralité de cellules (3).

**15.** Véhicule automobile comprenant un module de commande sans fil (11) selon l'une quelconque des revendications 1 à 4 ; ou une batterie (1) selon l'une quelconque des revendications 5 à 12 ; ou ; ou un système d'alimentation (13) selon la revendication 13 ou 14.

Fig. 1

11(1,1)

WIRELESS NODE

e.g. 802-15-4

15

MICRO-PROCESSOR

31

TEMPERATURE SENSOR

19

POWER SUPPLY

17

VOLTAGE MEASUREMENT

21

25

23

29

27

5

7

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100196748 A
- US 20080274400 A
- US 20080226969 A
- US 20060022646 A
- EP 2211193 A
- CA 94583